# EUROPÄISCHE PATENTSCHRIFT

(11) **EP 0 313 959 B1**
(45) Veröffentlichungstag und Bekanntmachung des Hinweises auf die Patenterteilung: **16.03.1994**
(21) Anmeldenummer: 88117292.8
(22) Anmeldetag: 18.10.1988
(51) Int. Cl.: C21C 5/56

(54) **Anlage zur Herstellung von Stahl, insbesondere Ministahlwerksanlage**
Steel-making plant, especially mini-plant
Installation pour l'élaboration de l'acier, en particulier une mini-installation

(30) Priorität: 26.10.1987 DE 3736117
(43) Veröffentlichungstag der Anmeldung: 03.05.1989
(73) Patentinhaber: MANNESMANN Aktiengesellschaft, 40027 Düsseldorf (DE)
(72) Erfinder: Meierling, Peter, Dr.-Ing., D-4000 Düsseldorf 31 (DE)
(74) Vertreter: Meissner, Peter E., Dipl.-Ing.

(56) Entgegenhaltungen:
- EP-A- 0 124 890
- AT-B- 304 825
- DE-A- 2 043 861
- DE-A- 3 116 925
- DE-A- 3 245 382
- DE-C- 765 497
- US-A- 4 506 370
- IRON & STEEL ENGINEERBand 64, Nr. 5, Mai 1987, Seiten 43-49, Pittsburgh, PA, US; W.-D. ROPKE et al.: "Application of state of the art technology for compactelectric arc furnace steel plants"

## Beschreibung

Die Erfindung bezieht sich auf eine Anlage zur Herstellung von Stahl, insbesondere Ministahlwerksanlage, in der aus Eisenträgern, vorzugsweise Schrott o. dgl. Einsatzmaterial Stahl erschmolzen wird, nach dem Oberbegriff des Anspruchs 1.

Um Investitions- und Produktionskosten einzusparen, ist man in der Hüttenindustrie seit langem bestrebt, das Investitionsvolumen für die Anlagen zu verkleinern, was insbesondere durch Verkürzung der Transportwege erzielt werden kann. Das gilt sowohl für große Anlagen, wie die sogenannten integrierten Hüttenwerke, als auch für die inzwischen zahlreich erstellten sogenannten Ministahlwerke, die insbesondere für die Herstellung von Massenstählen aus Schrott dienen. In der Regel wird dabei der Schrott mit oder ohne Vorwärmung in einem Elektroofen zu Stahl erschmolzen und in einer nachgeschalteten Stranggießanlage kontinuierlich vergossen. Obwohl ein großer Teil der bekannten Ministahlwerke als Neubauten errichtet worden ist und diese dementsprechend neu konzipiert wurden, sind auch diese Anlagen durch zu enge Anlehnung an die bekannten "klassischen" Hüttenwerke immer noch zu groß und zu aufwendig gestaltet.

Aus der DE-OS 33 16 367 ist ein Verfahren und eine Einrichtung zum Erzeugen von Stahl mittels Sauerstoffblasen vorbekannt, bei der bereits die Behandlung der Schmelze vom Hochofen bis zur Stranggießanlage auf einer geraden Linie in auf Wagen verfahrbaren metallurgischen Behältern erfolgen soll, wobei diese gerade Linie in einer Halle verläuft. Dabei ist alternativ auch ein 100%iger Schrotteinsatz vorgesehen, ohne daß dafür ein besonderer Einschmelzofen verwendet wird. In fahrbaren, sauerstoffbeheizten Pfannen läßt sich Schrott jedoch nicht wirtschaftlich einschmelzen. Die bekannte Problematik des Schrotteinschmelzens ohne Zugabe von Roheisen ist somit nicht berücksichtigt. Ferner ist über erforderliche Verfahrensschritte und Anlagenteile wie Pfannenrückführung und -zustellung, Zuführung der benötigten Stoffe, Versorgungseinrichtungen, um nur einige zu nennen, nichts offenbart. Die anlagentechnische Ausführbarkeit des vorgeschlagenen und - wegen der Roheisenbasis - gattungsfremden Verfahrens steht somit in Frage.

Aus der Literaturstelle Iron & Steel Eng. 64(1987)5, 43 - 49, ist eine Ofenhalle bekannt, in der die einzelnen Behandlungsstationen räumlich hintereinander geschaltet und in der zwei Krane parallel nebeneinander verfahrbar sind. Die Breite dieser beiden Krane in der Ofenhalle entsprechen der Breite des Kranes in der Schrotthalle. Die im Text erwähnte kleinstmögliche Baugröße bezieht sich auf diese dargestellte Bauweise, in der die "melting bay" parallel zur "service bay" angeordnet ist. Diese kleinstmögliche Breite beider Hallen ist aber immer noch so groß, daß die darin parallel verfahrbaren Krane Platz finden müssen.

Der Erfindung liegt die Aufgabe zugrunde, eine Anlage zur Herstellung von Stahl der eingangs genannten Art so zu verbessern, daß durch weitere Verringerung der Anlagengröße kostengünstiger gebaut und produziert werden kann. Die Aufgabe ist gelöst durch die Merkmale des kennzeichnenden Teils des Anspruchs 1.

Vorteilhafte Ausgestaltungen der Erfindung sind Gegenstand der Ansprüche 2 bis 15.

Mit der Erfindung und ihren Ausgestaltungen werden zahlreiche Vorteile erzielt, von denen die wesentlichsten nachfolgend wiedergegeben sind.

Durch die Anpassung des Querschnitts der Ofenhalle an die Behandlungs-Aggregate, wie Einschmelzofen, Schrottvorwärmanlage, Pfannenheiz- und Vorwärmstation sowie Entgasungsstation, um nur die wichtigsten zu nennen, ergibt sich ein geringstmöglicher Aufwand an Bauvolumen. Damit verbunden sind gleichzeitig eine entsprechend erhebliche Verringerung des Aufwandes für die Hallenentlüftung, wobei durch die Ausführung der Ofenhalle als geschlossene Halle etwaiger Staub aus benachbarten Hallen nicht anfällt. Damit wird nicht nur das Bedienungs- und/oder Wartungspersonal, sondern auch die in der Ofenhalle vorhandenen Einrichtungen einer geringeren Staubbelastung ausgesetzt, was mit einem entsprechend geringeren Verschleiß verbunden ist.

Die Anpassung des Querschnitts der Ofenhalle an die Aggregate bedeutet in erster Linie, daß die seitlichen Hallenwände den geringstmöglichen Abstand von den Aggregaten aufweisen. Das gleiche gilt auch für die Hallenhöhen, wobei vor allem die jeweils eingesetzten Material-Transporteinrichtungen zu berücksichtigen sind.

Durch die geradlinige Verbindung benachbarter Behandlungsstationen werden diese unter Ermöglichung kürzester Transportwege für das Material in bezug auf den Materialfluß eindeutig einander zugeordnet. Es wird ferner ermöglicht und vorzugsweise vorgesehen, die Transporteinrichtungen - unabhängig davon, welche der verschiedenen bekannten Transporteinrichtungen verwendet wird bzw. werden - in der senkrechten Ebene der geradlinigen Verbindung anzuordnen, wodurch im Falle des Materialtransports in Pfannen oder Kübeln in der Hallenmitte angeordnete Laufkatzen - bei denen es sich um Zweischienen- oder Einschienen-Laufkatzen handeln kann - anstelle aufwendiger Brückenkrane für den Transport eingsetzt werden können. Wenn die Behandlungsstationen sämtlich auf einer geraden Linie angeordnet sind, wie es bevorzugt vorgesehen ist, reicht unter Umständen eine einzige Laufkatze für den Materialtransport aus. Dabei kann mit Vorteil die Ofenhalle die Breite ihres Querschnitts über die ganze Länge zumindest im wesentlichen beibehalten. Der Transport kann auch durch auf Schienen laufende Pfannenwagen oder - je nach Materialbeschaffenheit - entweder durch Förderbänder oder Förderrinnen erfolgen.

In der neuen Anlage können die leeren Pfannen aus der Gießhalle auf kürzestem Wege im Kreislauf zum Einschmelzofen zurücktransportiert werden. Das kann in oder neben der Ofenhalle erfolgen. Die Rückführung erfolgt zweckmäßig über die Zustellhalle, wenn, wie bevorzugt vorgesehen ist, sich - bezogen auf die Materialfluß-Richtung - hinter dem Einschmelzofen seitlich an die Ofenhalle eine mit einem an die Ofenhalle angrenzenden Zustellhallen-Teil versehene Gießhalle anschließt. Weiter wird dadurch ermöglicht, daß das Pfannenausblasen und -ausbrennen nicht in der Ofenhalle durchgeführt wird und die betreffende Station ggf. gesondert auf einfache Weise unmittelbar zur Staubabsaugung eingekapselt werden kann. Die Gießhalle kann dabei parallel oder im rechten Winkel zur Ofenhalle verlaufen. An die Gießhalle, die ebenfalls so niedrig wie möglich und ggf. in der Höhe abgestuft ausgeführt ist, schließen sich die entsprechenden Hallen für die jeweils vorgesehene Art der Weiterverarbeitung des Materials an.

Die Anlage nach der Erfindung ermöglicht es ferner, neben bzw. gegenüber der Gießhalle Bedienungsstationen für die in der Ofenhalle angeordneten Aggregate unmittelbar neben der Ofenhalle anzuordnen. Dabei handelt es sich um Einrichtungen wie Steuerbühne, Laboratorium, Einrichtungen der Strom-, Wasser- und Hydraulikölversorgung. Durch die Anordnung sind diese schnell und gut zugänglich und gegen Staub oder Hitzeeinwirkungen geschützt.

Im Falle, daß von einer Bedienungsstation größere Teile in die Ofenhalle zu transportieren sind, wie z.B. die Elektroden für einen Elektrodenwechsel, ist bevorzugt eine senkrecht zur Ofenhalle verfahrbare Laufkatze oder ein kleinerer Brückenkran mit dem zugeordneten Aggregat verbunden. Der Durchtritt durch die Ofenwand kann durch eine dicht abschließende Tür hergestellt werden.

Besonders vorteilhaft ist es ferner, die Ofenhalle im Bereich des Einschmelzofens, vorzugsweise ein mit einem Bodenabstich versehener Elektroofen, gleichzeitig als mit einer Gas-Abzugseinrichtung versehene Einhausung auszubilden. Der Gasabzugseinrichtung kann eine Entstaubungsanlage direkt nachgeschaltet werden.
Insbesondere dann, wenn an einem Standort die Stromversorgung nicht ausreichend oder nicht sichergestellt ist, ist es vorteilhaft, daß der Einschmelzofen und/oder andere Heiz-Behandlungsstationen durch verschiedene Heizmittel gleichzeitig oder alternativ beheizbar sind. Dadurch wird eine größere Flexibilität im Hinblick auf die Energieversorgung sichergestellt. Neben der elektrischen Beheizung der verschiedenen Arten kommen insbesondere Beheizungen durch Lanzen, Brenner und insbesondere Plasma-Brenner in Betracht.

Für den bevorzugten Anwendungsfall, daß als Einsatzmaterial Schrott oder kalt angelieferter, geeigneter Eisenschwamm Verwendung findet, ist es besonders vorteilhaft, daß das Gefäß des Einschmelzofens unter eine stationäre Vorwärmstation verfahrbar ist. Die Vorwärmstation kann dann mittels der Abgase des Einschmelzofens, die der Vorwärmstation über fest installierte Leitungen zugeführt werden, beheizt werden.

Die Herstellung von Stahl in der neuen Anlage ist jedoch nicht auf den Einsatz von Schrott oder Eisenschwamm beschränkt, sondern kann auch andere Eisenträger, z.B. Eisenerze, verwenden. In dem Fall kommen dem Einschmelzofen vorgeschaltete Reduktionseinrichtungen, wie bekannte Feststoff- oder Gasdirektreduktionseinrichtungen oder auch Schmmelzreduktionseinrichtungen zum Einsatz. Ein Schachtofen oder Drehrohrofen kann dabei dem Einschmelzofen direkt vorgeschaltet werden, so daß der heiße Eisenschwamm ohne Zwischenabkühlung in den Einschmelzofen chargiert wird. Bei den Schmelzreduktionsverfahren, mit denen Roheisen erzeugt wird, wird zur Weiterbehandlung des flüssigen Roheisens bevorzugt ein Sauerstoffblaskonverter eingesetzt. Die einzelnen Behandlungsaggregate der Reduktion oder Schmelzreduktion können - soweit erforderlich - in gleicher Weise wie die anderen Behandlungsstationen in der Ofenhalle geradlinig hintereinandergeschaltet werden. Es ist ferner denkbar, in Anpassung an die Rohstofflage bei Umstellungen der dem Einschmelzofen vorgechalteten Behandlung in der Weise vorzunehmen, daß vorhandene Behandlungsaggregate umgehbar oder austauschbar sind. Letzteres gilt auch für die Behandlungskette hinter dem Einschmelzofen im Falle einer wahlweisen Herstellung von Massen-, Edel- oder anderem Spezialstahl. Dabei kann zwischen den Einschmelzofen und die Reservestation der Stranggußanlage mindestens eine geeignete Behandlungsstation, wie Rührgas-Blaskonverter oder Entgasungseinrichtung, eingeschaltet werden. Für den Fall, daß vorgesehen ist, solche Stähle ausschließlich herzustellen, werden selbstredend die betreffenden Behandlungsstationen fest installiert.

Trotz der Flexibilität in bezug auf die Anpassung an die verschiedenen Rohstoffe und herzustellenden Stähle ermöglicht die neue Anlage eine weitestgehende Standardisierung der Gebäude und ihrer Einrichtungen, z.B. nach Art eines Modulsystems. Dabei ist es auch möglich, bei vorgesehenen Produktionserhöhungen auf einfache Weise Behandlungsaggregate und andere mechanische und elektrische Einrichtungen gegen größere auszutauschen. In bezug auf das Modulsystem bedeutet das, daß in eine Hallengröße mehrere Größen der Behandlungsaggregate passen, wobei die Flexibilität noch dadurch erhöht werden kann, daß in den Größen-Stufen Überschneidungen möglich sind, d.h., daß die gleichen Behandlungsaggregate in mindestens zwei Hallengrößen verwendet werden können. Begünstigt wird diese Maßnahme insbesondere dadurch, daß sich die Ofendurchmesser auch bei größerer Änderung der Einschmelzleistung nur in geringem Umfang verändern. So wird Z.B. bei einer Stahl-Produktion von etwa 150 000 t/a ein Elektroofen von etwa 4 m ⌀ benötigt, bei einer Produktion von etwa 750 000 t/a jedoch nur ein solcher mit etwa 7,3 m ⌀. Wegen der mittigen Anordnung der Transporteinrichtungen in der Ofenhalle ist es ferner möglich, die Halle durch Versetzung der Ofenwände in begrenztem Umfang zu verbreitern. Die Baukosten für die Ofenhalle reduzieren sich bei derneuen Anlage etwa bis zum zweieinhalbfachen gegenüber bekannten Ofenhallen.

Ein weiterer Vorteil der Anlage nach der Erfindung liegt darin, daß die Auslastung der eingesetzten Transporteinrichtungen, insbesondere der Kräne, gegenüber den Produktionsverfahren in bekannten Anlagen wesentlich vergleichmäßigt wird. So ergibt sich in der Zustellhalle nach der Erfindung eine Kranauslastung bis zu etwa 60 %, gegenüber etwa 30 % in bekannten Zustellhallen. Aber auch die anderen Transporteinrichtungen, wie die bevorzugt eingesetzten Laufkatzen, weisen ebenfalls eine Auslastung von etwa 60 % auf, ohne den reibungslosen Materialfluß zu beeinträchtigen. Durch die Anordnung aller Transporteinrichtungen der Anlage in einer jeweils eindeutig örtlich und funktional begrenzten Zuordnung zu den einzelnen Arbeitsgängen ergibt sich ein Materialfluß praktisch ohne Verzögerungen, da vermieden wird, daß eine Transporteinrichtung mehrere Einsätze zeitgleich durchzuführen hat. Der Transport von Legierungsstoffen, Zuschlägen o. dgl. kann in bekannter Weise aus Bunkern über Fördereinrichtungen erfolgen, während für den Transport von Hilfsstoffen und anderen Produkten, wie ff-Material oder Schlacken, in erster Linie Flurfahrzeuge vorgesehen sind.

Mehrere Ausführungsbeispiele der Anlage nach der Erfindung sind in der Zeichnung schematisch dargestellt und nachfolgend näher erläutert. Es zeigt
- Fig. 1: eine Anlage zur Herstellung von Massenstahl in Draufsicht,
- Fig. 2: einen senkrechten Mittelschnitt in Längsrichtung der Ofenhalle nach Fig. 1,
- Fig. 3: einen Schnitt nach der Linie III-III in Fig. 2,
- Fig. 4: einen Schnitt nach der Linie IV-IV in Fig. 2,
- Fig. 5: eine Anlage mit zwei spiegelbildlich parallel zueinander angeordneten Ofenhallen und einer dazwischenliegenden Gießhalle in Draufsicht,
- Fig. 6: ein Ausführungsbeispiel mit einer abgewinkelten Ofenhalle in Draufsicht.

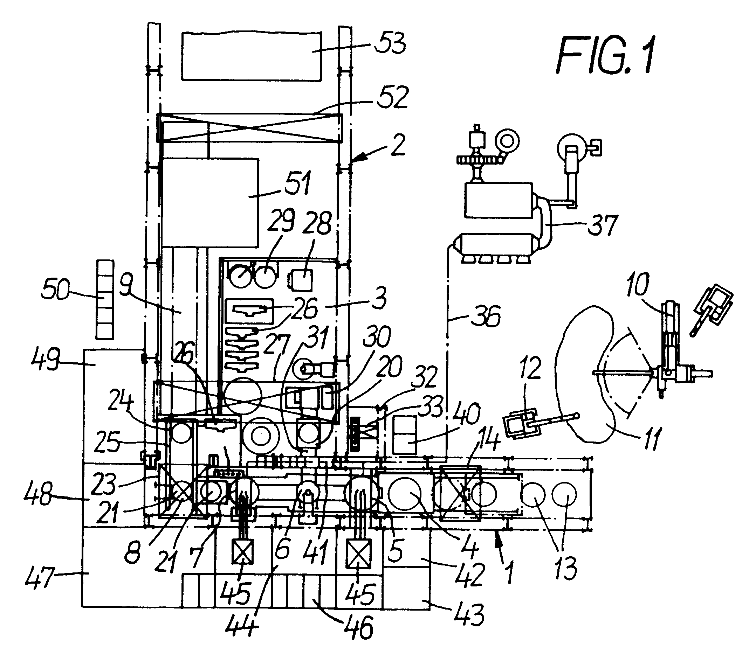

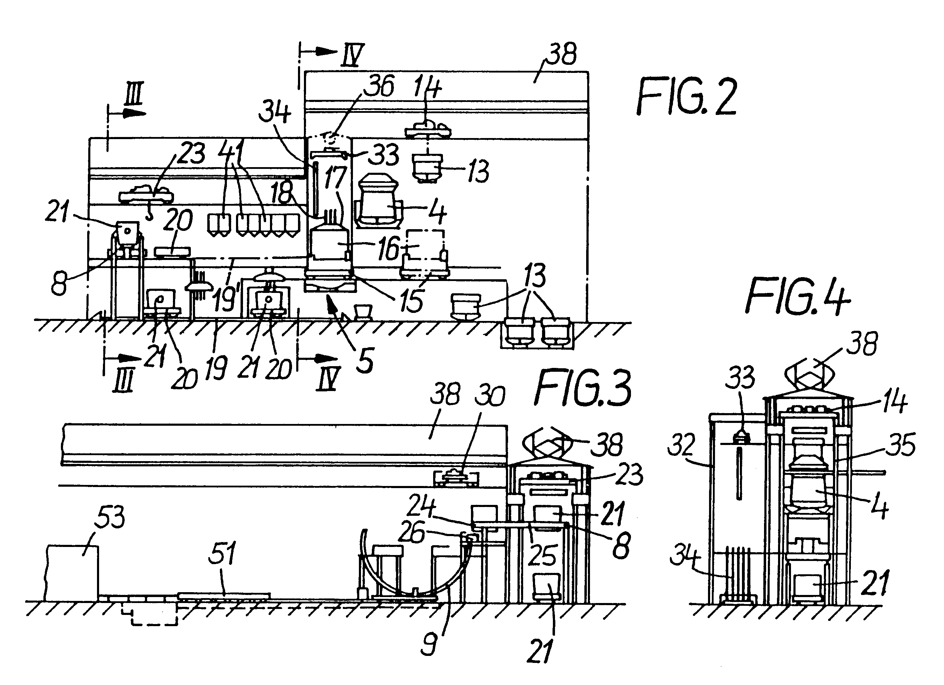

Wie aus Fig. 1 ersichtlich, schließt sich an eine langgestreckte Ofenhalle 1 seitlich und rechtwinklig eine Gießhalle 2 an, die einen Zustellhallen-Teil 3 umfaßt, der mit einem Ende ebenfalls an die Ofenhalle 1 angrenzt. In der Ofenhalle 1 sind hintereinander ein Hochtemperatur-Schrottvorwärmstation 4, ein Elektroofen 5, eine brennerbeheizte Pfannen-Vorwärmstation 6, eine lichtbogenbeheizte Pfannen-Aufheizstation 7 und eine Pfannen-Reservestation 8 für eine nachgeschaltete, in der Gießhalle 2 angeordnete Stranggußmaschine 9 angeordnet. Die über ihre gesamte Länge die gleiche Breite aufweisende Ofenhalle 1 ist in ihrer Höhe zwischen dem als Einschmelzofen dienenden Elektroofen 5 und der Pfannen-Vorwärmstation 6 abgestuft. Diese Abstufung fällt außerdem zusammen mit der an dieser Stelle an die Ofenhalle angrenzenden Seitenwand der Gießhalle 2, die die gleiche Höhe wie der an sie angrenzende Teil der Ofenhalle aufweist, wie es die Fig. 2 und 3 zeigen.

In der Anlage ergibt sich folgender Produktionsablauf und Materialfluß: Gegebenenfalls in einer Zerkleinerungsanlage 10 zerkleinerter und verdichteter Schrott wird von einem Lager 11 mittels eines Greiferkrans in Schrottkörbe 13 gefüllt, die am Ende der Ofenhalle 1 für den Greiferkran zugänglich angeordnet sind. Mittels einer Chargier-Laufkatze 14 wird der jeweils bereit stehende gefüllte Schrottkorb 13 über die Vorwärmstation 4 transportiert und in diese durch Öffnen ihrer Bodenklappen entleert. Der hoch vorerhitzte Schrott wird - ebenfalls durch Bodenentleerung - in das unter die Vorwärmstation 4 mittels eines auf Schienen laufenden Wagens 15 unter die Vorwärmstation 4 gefahrene Gefäß 16 des Elektroofens entleert. Vor dem Verfahren des Gefäßes wird der Deckel 17 des Elektroofens angehoben und die Elektroden 18 aus dem Gefäß 16 entfernt. Nach dem Füllen des Gefäßes 16 fährt dieses an die Behandlungsstation des Elektroofens 5 zurück, in welcher der Schrott in bekannter Weise eingeschmolzen wird. Der erschmolzene Stahl wird durch einen Bodenabstich aus dem Elektroofen 5 in eine auf einem Gleis 19 mittels eines Wagens 20 unter den Ofen gefahrene Pfanne 21 entleert. Zuvor ist die Zustellung der Pfanne in der Pfannen-Vorwärmstation 6 auf die erforderliche Temperatur vorgeheizt worden. Als nächstes wird der Wagen 20 mit der gefüllten Pfanne auf dem Gleis 19 zur Pfannen-Heizstation 7, auch Pfannenofen genannt, zum Aufheizen auf die erforderliche Temperatur mittels einer Lichtbogenbeheizung 22 verfahren. Nach dem beendeten Aufheizen werden die Elektroden der Lichtbogenbeheizung 22 aus der Pfanne entfernt; danach wird die Pfanne 21 auf dem Wagen 20 weitertransportiert, durch eine im niedrigeren Teil der Ofenhalle verfahrbare Gieß-Laufkatze 23 angehoben und in die Reservestation 8 eingesetzt. Von der Reservestation 8 wird die Pfanne in die Gießposition 24 der Stranggußmaschine 9 über Schienen 25 verfahren, sobald die vorhergehende leere Pfanne aus der Gießstation 24 entfernt wurde. Entleert wird in bekannter Weise in ein unter der Pfanne angeordnetes Verteilergefäß 26.

Die Gießhalle 2 wird in ihrer gesamten Breite von einem Brückenkran 27 überspannt, der die leere Pfanne 21 aus der Gießposition 24 in die Zustellhalle 3 befördert. Dort wird sie je nach ihrem Zustand entweder zu einer Ausbruchstation 28 und anschließend zur Zustellstation 29 oder zur Vorbereitung für die nächste Pfannenfüllung zum sog. waagerechten Pfannenfeuer 30 zum Freiblasen des Spülsteins und Wartung des Pfannenverschlusses gebracht. Von hier aus wird die Pfanne auf einen Wagen 20 gesetzt, der auf einem Gleis 31 bereit steht, das vom Zustellhallen-Teil 3 bis zur Pfannen-Vorheizstation 6 in der Ofenhalle 1 reicht. An der Kreuzungsstelle der Gleise 19 und 31 ist eine Wagen-Drehscheibe angeordnet. Von der Pfannen-Vorwärmstation 6 wird die vorgewärmte Pfanne wieder zum Füllen mit dem nächsten Abguß unter den Elektroofen 5 verfahren.

Für den Fall, daß zur Rückführung der Pfannen eine zweite Schiene vorgesehen ist, kann, wie in Fig. 2 gezeigt, ein erhöht angeordnetes Gleis - wie durch die Strichpunktlinie 19′ angedeutet - bis in den Bereich des Ofens 5 weitergeführt werden und beidendig durch nicht dargestellte, mit Weichen versehene Lifteinrichtungen für die Pfannen 19 - bzw. für deren Wagen 20 - mit dem Gleis 19 verbunden werden. Die Gieß-Laufkatze 23 kann dann entfallen.

Für eine Neuzustellung oder Reparatur können die Pfannen in den - nicht dargestellten - Zustellhallen-Teil weitergeleitet werden, der in dem Fall vorteilhaft an die Stirnseite der Ofenhalle 1 im Bereich der Reservestation 8 der Gießstation anschließt, und in den hinein das Gleis 19 geradlinig verlängert ist.

Bei Ausfall der Vorwärmstation 4 kann das Gefäß 16 zum Auffüllen mit Schrott durch die Chargier-Laufkatze 14 unter der Vorwärmstation hindurch bis in die in Fig. 1 und 2 strichpunktiert angedeutete Stellung gefahren werden.

In der Ecke, die zwischen der Ofenhalle 1 und der Gießhalle 2 gebildet wird, ist eine Bedienungsstation 32 angeordnet, von der aus mittels eines Brückenkrans 33 der Austausch der Elektroden 34 am Elektroofen 5 erfolgt. Der Elektroofen 5 ist von einer besonderen Einhausung 35 umgeben, die, wie durch die Strichpunktlinie 36 angedeutet, an eine Absaug-und Entstaubungsanlage 37 angeschlossen ist. Die Dächer der Ofen- und Gießhalle sind jeweils durchgehend mit einer Entlüftungseinrichtung 38 versehen. Die als Zweischienen-Laufkatze ausgebildete Gieß-Laufkatze 23 ist zusätzlich mit einer quer zur Ofenhalle 1 verfahrbaren Hilfskatze mit geringerer Tragkraft ausgerüstet, die in erster Linie für den Austausch der Elektroden 39 der Pfannen-Heizstation 7 eingesetzt wird. Neben der Ofenhalle 1 sind jeweils höher als die zugeordneten Behandlungsstationen Bunker 40 und 41 für Legierungsmittel und Zuschläge angeordnet, die über nicht dargestellte Förderbänder und Rutschen bei Bedarf chargiert werden. Neben der Ofenhalle 1 sind gegenüber der Gießhalle verschiedene Bedienungsstationen und Werkstätten angeordnet, wie Steuerbühne 42, Laboratorium 43, Reparaturwerkstatt 44, Transformatoren 45 für die Lichtbogenversorgung, Stromversorgung 46 und Flicker-Spannungskompensation 47. Ferner schließt sich eine Hydraulikölversorgungsstation 48 und - an die Gießhalle 2 angrenzend - eine Wasserversorgung 49 und Kühltürme 50 an. In der Gießhalle 2 werden die abgeschnittenen Knüppel von einem Kühlbett 51 durch einen Brückenkran 52 in einen Stoßofen 53 transport, von wo aus sie in eine nicht dargestellte Walzenstraße weitergeleitet werden.

Für den Wechsel des Bodens und des Oberteils des Gefäßes 16, des Deckels 17 und des Deckel-Herzstücks des Elektroofens 5 werden vom Zustellhalter-Teil 3 aus gesehen der Brückenkran 30, einer der Pfannenwagen 20, das Gleis 31, die Gieß-Laufkatze 23 und der Wagen 15, der hierfür in den Bereich der Pfannen-Vorheizstation 6 verfährt, eingesetzt. Es kann aber auch ein Transport mittels eines Flurfahrzeugs zwischen dem Zustellhallen-Teil 3 und der Ofenhalle 1 außerhalb der Hallen erfolgen, wobei der Wagen 15 unter die in diesem Fall eingesetzte Chargier-Laufkatze 14 gefahren wird. Dies kommt insbesondere für seltene Transporte schwerer Teile, z.B. des Bodens des Gefäßes 16, in Betracht.

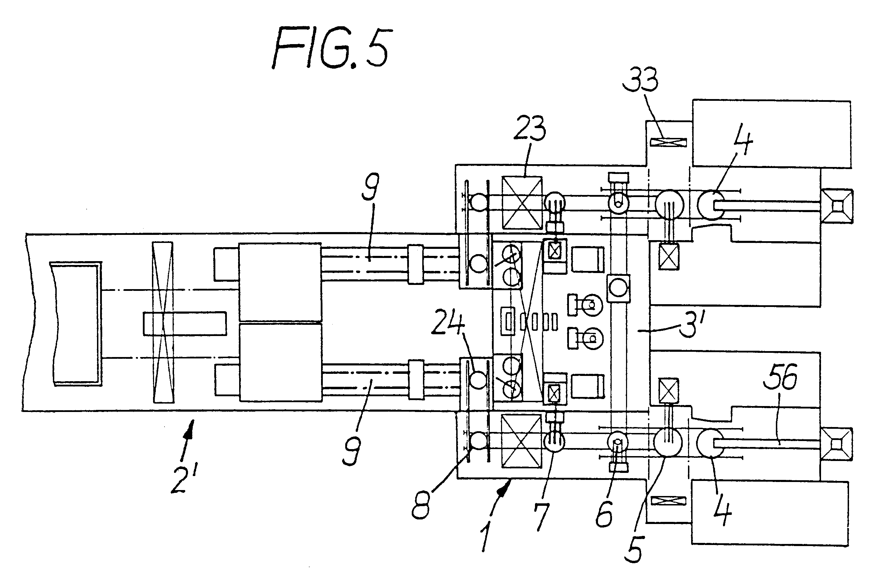

Bis auf den Eingangs- oder Chargierhallenteil weisen auch die beiden Ofenhallen 1 beim Ausführungsbeispiel nach Fig. 5 wieder den gleichen Aufbau wie das Ausführungsbeispiel nach Fig. 1 auf. Im Unterschied dazu wird das Chargieren der beiden Vorwärmstationen 4 durch ein sich jeweils in Hallenmitte erstreckendes ansteigendes Förderband, insbesondere ein Plattenband 56, mit Schrott beschickt. Ferner erstreckt sich der Zustellhallenteil 3′ bei dieser Anlage zwischen den beiden Ofenhallen 1 am Ende der mit zwei Gießmaschinen 9 ausgerüsteten Gießhalle 2′ über die gesamte Gießhallen-Breite trotz dieser Abänderungen ergibt sich für den Materialfluß und den Transport der Pfannen in dieser Anlage der gleiche Ablauf wie beim Ausführungsbeispiel nach Fig. 1. Durch die eingesetzten Plattenbänder 56 entfällt in der jeweiligen Ofenhalle die Chargier-Laufkatze 14.

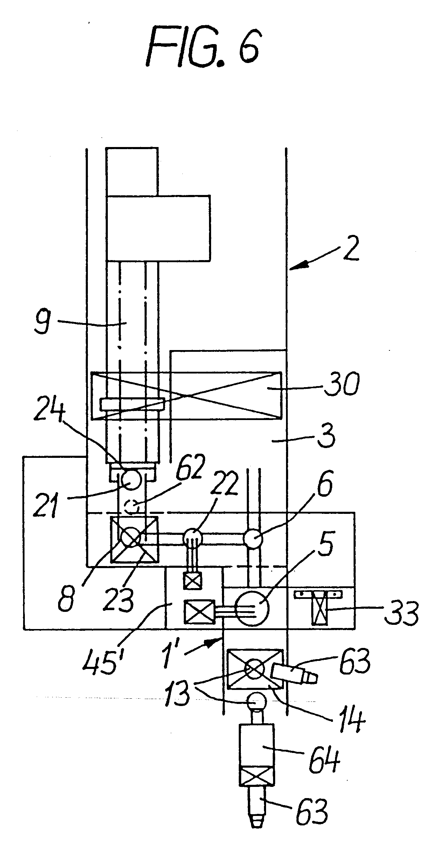

Bei der Anlage nach Fig. 6 ist die Ofenhalle 1′ im Bereich der Pfannen-Vorheizstation 6 abgewinkelt, so daß sich gegenüber dem Ausführungsbeispiel nach Fig. 1 eine Anlage von geringerer Breite ergibt. Anstelle der Schienen 25 zum Verschieben der Pfannen 21 von der Reservestation 8 in die Gießposition 24 ist hier ein Pfannen-Drehturm 62 eingesetzt. Der Schrott wird durch Lastkraftwagen 63 entweder direkt in die bereitstehenden Schrottkörbe 13 befördert oder - wenn erforderlich - in den Aufgabetrichter einer vorgeschalteten Zerkleinerungseinrichtung 64 gefüllt. Materialfluß und Pfannentransport werden durch diese Variante ebenfalls nicht geändert.

## Patentansprüche

1. Anlage zur Herstellung von Stahl, insbesondere Ministahlwerksanlage, in der aus Eisenträgern, vorzugsweise Schrott oder dergleichen Einsatzmaterial, Stahl in einem Ofen erschmolzen und aus Pfannen in einer Gießhalle kontinuierlich vergossen wird, wobei zwischengeschaltete einzelne Behandlungsstationen räumlich hintereinandergeschaltet und - in bezug auf den Materialfluß und die Mitte der Station - auf einer Linie angeordnet sind,
**dadurch gekennzeichnet**,
daß der Ofen (5) und sämtliche übrigen Behandlungsstationen (4, 6, 7, 8) in einer im Querschnitt im wesentlichen an die Aggregate der Behandlungsstationen angepaßten Ofenhalle (1) angeordnet sind und jede Behandlungsstation (4 - 8) mit der jeweils benachbarten geradlinig verbunden ist unter Verwendung mindestens einer Laufkatze (14; 23), die mindestens über einen Teil der Ofenhalle (1) nur in deren Längsrichtung verfahrbar ist, und daß die der Ofenhalle (1) nachgeschaltete Gießhalle (2) einen an die Ofenhalle (1) angrenzenden Zustellhallen-Teil (3) aufweist, und daß sich die mit dem an die Ofenhalle angrenzenden Zustellhallen-Teil (3) versehene Gießhalle (2) - bezogen auf die Materialfluß-Richtung - hinter dem Einschmelzofen (5) seitlich an die Ofenhalle (1) anschließt.

2. Anlage nach Anspruch 1, dadurch gekennzeichnet, daß die Laufkatze(n) (14; 23) in der senkrechten Ebene der geradlinigen Verbindung angeordnet ist bzw. sind.

3. Anlage nach Anspruch 1 oder 2, dadurch gekennzeichnet, daß zumindest zwischen dem Einschmelzofen und der Pfannen-Reservestation (8) der Gießstation einer Stranggießanlage (9) die Behandlungsstationen auf einer geraden Linie angeordnet sind.

4. Anlage nach einem der Ansprüche 1 bis 3 dadurch gekennzeichnet, daß zwei Ofenhallen (1) parallel und - in bezug auf ihre Aggregate - spiegelbildlich zueinander und an eine dazwischenliegende Gießhalle (2) angrenzend angeordnet sind.

5. Anlage nach einem der vorhergehenden Ansprüche, dadurch gekennzeichnet, daß neben bzw. gegenüber der Gießhalle (2) Bedienungsstationen für die in der Ofenhalle (1,) angeordneten Aggregate unmittelbar neben der Ofenhalle angeordnet sind.

6. Anlage nach Anspruch 5, dadurch gekennzeichnet, daß zumindest ein Teil der Bedienungsstationen über eine senkrecht zur Ofenhalle (1,) verfahrbare Laufkatze (33) mit dem zugeordneten Aggregat verbunden ist.

7. Anlage nach einem der vorhergehenden Ansprüche, dadurch gekennzeichnet, daß die Pfannen (21) mittels eines Wagens (20) auf einer mittig in der Ofenhalle (1,) verlaufenden Schiene (Gleis 19) verfahrbar sind.

8. Anlage nach Anspruch 7, dadurch gekennzeichnet, daß eine zweite über oder unter der Schiene (Gleis 19) angeordnete Schiene (Gleis 19') für die Rückführung der Pfannen (21) angeordnet ist.

9. Anlage nach Anspruch 7, dadurch gekennzeichnet, daß die Schiene (Gleils 19) über eine Kreuzung mit einer in den Zustellhallenteil hineingeführten Schiene (Gleis 31) verbindbar ist.

10. Anlage nach Anspruch 10, dadurch gekennzeichnet, daß die durch eine Wagen-Drehscheibe gebildete Kreuzung als Pfannenvorwärmstation (6) ausgebildet ist.

11. Anlage nach einem der vorhergehenden Ansprüche, dadurch gekennzeichnet, daß die Ofenhalle (1,) zumindest im Bereich des Einschmelzofens gleichzeitig als mit einer Gas-Abzugseinrichtung (37) versehene Einhausung (35) ausgebildet ist.

12. Anlage nach einem der vorhergehenden Ansprüche, dadurch gekennzeichnet, daß als Einschmelzofen ein mit einem Bodenabstich versehener Elektroofen (5) verwendet ist.

13. Anlage nach einem der vorhergehenden Ansprüche, dadurch gekennzeichnet, daß der Einschmelzofen und/oder andere Heiz-Behandlungsstationen durch verschiedene Heizmittel gleichzeitig oder alternativ beheizbar ist.

14. Anlage nach Anspruch 12 oder 13, dadurch gekennzeichnet, daß der Elektrodenwechsel des Einschmelzofens und/oder einer Pfannenbeheizung mittels einer der senkrecht zur Ofenhalle verfahrbaren Laufkatzen (33) erfolgt.

15. Anlage nach einem der vorhergehenden Ansprüche bei Verwendung von Schrott od. dgl. Einsatzmaterial, dadurch gekennzeichnet, daß das Gefäß (16) des Einschmelzofens (5) unter eine von oben mit Schrott beschickbare Vorwärmstation (4) verfahrbar ist.

## Claims

1. A plant for producing steel, in particular a mini-steelmaking plant, in which from iron girders, preferably scrap or similar charge material, steel is smelted in a furnace and is cast continuously from ladles in a casting bay, interposed individual treatment stations being spatially connected in series and being arranged - with respect to the material flow and the centre of the station - in a line, characterised in that the furnace (5) and all the other treatment stations (4, 6, 7, 8) are arranged in a furnace bay (1) which is adapted in cross-section substantially to the units of the treatment stations and each treatment station (4 - 8) is connected in a straight line to the respectively neighbouring one using at least one crab (14; 23) which can travel at least over part of the furnace bay (1) only in the longitudinal direction thereof, and in that the casting bay (2) connected subsequently to the furnace bay (1) has a delivery bay part (3) adjoining the furnace bay (1), and in that the casting bay (2) provided with the delivery bay part (3) adjoining the furnace bay links up - related to the material flow direction - after the smelting-down furnace (5) laterally with the furnace bay (1).

2. Plant according to claim 1 , characterised in that the crab(s) (14; 23) is or are arranged in the vertical plane of the rectilinear connection.

3. Plant according to claim 1 or 2, characterised in that at least between the smelting-down furnace and the ladle reserve station (8) of the casting station of a continuous casting plant (9) the treatment stations are arranged in a straight line.

4. Plant according to any one of claims 1 to 3, characterised in that two furnace bays (1) are arranged parallel and - with respect to their units - in mirror-inverted manner to one another and adjoining a casting bay (2) lying therebetween.

5. Plant according to any one of the preceding claims, characterised in that next to or respectively opposite the casting bay (2) operating stations for the units arranged in the furnace hay (1) are arranged directly next to the furnace bay.

6. Plant according to claim 5, characterised in that at least a part of the operating stations is connected to the associated unit by way of a crab (33) which can travel normal to the furnace bay (10).

7. Plant according to any one of the preceding claims, characterised in that the ladles (21) can travel by means of a truck (20) on a rail (track 19) extending centrally in the furnace bay (1).

8. Plant according to claim 7, characterised in that a second rail (track 19') arranged above or below the rail (track 19) is arranged for the return of the ladles (21).

9. Plant according to claim 7, characterised in that the rail (track 19) can be connected by way of a crossing to a rail (track 31) conducted into the delivery bay part.

10. Plant according to claim 10, characterised in that the crossing formed by a truck turntable is designed as a ladle preheating station (6).

11. Plant according to any one of the preceding claims, characterised in that the furnace bay (1) at least in the region of the smelting furnace is simultaneously designed as a housing (35) provided with a gas discharge device (37).

12. Plant according to any one of the preceding claims, characterised in that an electric furnace (5) provided with a bottom tap is used as the smelting-down furnace.

13. Plant according to any one of the preceding claims, characterised in that the smelting-down furnace and/or other heating treatment stations is or are heatable simultaneously or alternatively by diverse heating means.

14. Plant according to claim 12 or 13, characterised in that the electrode exchange of the smelting-down furnace and/or of a ladle heating is effected by means of one of the crabs (33) which can travel normal to the furnace bay.

15. Plant according to any one of the preceding claims using scrap or similar charge material, characterised in that the vessel (16) of the smelting-down furnace (5) can travel under a preheating station (4) which can be charged with scrap from above.

## Revendications

1. Installation de fabrication d'acier, en particulier mini-aciérie, dans laquelle à partir de matériaux ferreux, de préférence des mitrailles ou des matières premières similaires, de l'acier est mis en fusion dans un four et est coulé en continu dans un hall de coulée à partir de poches, tandis que des postes individuels de traitement intermédiaire sont spatialement disposés les uns derrière les autres, sur une ligne par rapport au flux des matières et au milieu des postes, caractérisé en ce que le four (5) et l'ensemble des autres postes de traitement (4, 6, 8) sont disposés dans un hall de four (1) dont la section transversale est adaptée en substance aux équipements des postes de traitement, chaque poste de traitement (4-8) étant relié en ligne droite à chaque poste voisin, en utilisant au moins un chariot (14; 23) qui peut être déplacé au moins sur une partie du hall de four (1) et uniquement dans le sens de la longueur de celui-ci, et en ce que le hall de coulée (2) installé en aval du hall de four (1) présente une partie (3) de four de préparation adjacente au hall de four (1), et en ce que le hall de coulée (2) daté de la partie (3) de hall de préparation adjacente au hall de four se raccorde latéralement au hall de four (1) à la suite du four de coulée (5) par rapport à la direction d'écoulement des matières.

2. Installation selon la revendication 1, caractérisée en ce que le ou les chariots (14; 23) sont disposés dans le plan vertical de la liaison en ligne droite.

3. Installation selon la revendication 1 ou 2, caractérisée en ce qu'au moins entre le four de fusion et le poste de réserve de poche (8) du poste de coulée d'une installation de coulée de barres (9), les postes de traitement sont disposés sur une ligne droite.

4. Installation selon l'une des revendications 1 à 3, caractérisée en ce que deux halls de four (1) sont disposés parallèlement et symétriquement l'un par rapport à l'autre en ce qui concerne leurs équipements, et en position adjacente à un hall de coulée (2) situé entre eux.

5. Installation selon l'une des revendications précédentes, caractérisée en ce qu'à côté ou en face du hall de coulée (2), des postes de service pour les équipements disposés dans le hall de four (1) sont disposés immédiatement à côté du hall de four.

6. Installation selon la revendication 5, caractérisée en ce qu'au moins une partie des postes de service est reliée à l'équipement associé par l'intermédiaire d'un chariot (33) pouvant être déplacé perpendiculairement par rapport au hall de four (1).

7. Installation selon l'une des revendications précédentes, caractérisée en ce que les poches (21) peuvent être déplacées au moyen d'un chariot (20) sur un rail (voie 19) s'étendant au milieu du hall de four (1).

8. Installation selon la revendication 7, caractérisée en ce qu'un second rail (voie 19') disposé au-dessus ou en dessous du rail (voie 19) est installé pour le retour des poches (21).

9. Installation selon la revendication 7, caractérisée en ce que le rail (voie 19) est relié par un croisement à un rail (voie 31) pénétrant dans la partie du hall de préparation.

10. Installation selon la revendication 9, caractérisée en ce que le croisement formé par un plateau tournant à chariot présente la forme d'un poste de préchauffage de poche (6).

11. Installation selon l'une des revendications précédentes, caractérisée en ce qu'au moins dans la zone du four de fusion, le hall de four (1) est simultanément réalisé sous forme d'un habillage (35) daté d'une installation (37) d'extraction des gaz.

12. Installation selon l'une des revendications précédentes, caractérisée en ce que l'on utilise comme four de fusion un four électrique (5) doté dans son fond d'un orifice de coulée.

13. Installation selon l'une des revendications précédentes, caractérisée en ce que le four de fusion et/ou d'autres postes de traitement thermique peuvent être chauffés simultanément ou alternativement par différents moyens de chauffage.

14. Installation selon la revendication 12 ou 13, caractérisée en ce que l'échange des électrodes du four de fusion et/ou d'un chauffage des poches s'effectue au moyen du chariot (33) pouvant être déplacé perpendiculairement au hall de four.

15. Installation selon l'une des revendications précédentes, pour utilisation de mitrailles ou de matières premières similaires, caractérisée en ce que la cuve (16) du four de fusion (5) peut être déplacée en dessous d'un poste de préchauffage (4) pouvant être alimenté en mitraille par le haut.
